# EUROPÄISCHE PATENTSCHRIFT

(11) **EP 1 228 730 B1**
(45) Veröffentlichungstag und Bekanntmachung des Hinweises auf die Patenterteilung: **09.03.2005**
(21) Anmeldenummer: 02000502.1
(22) Anmeldetag: 09.01.2002
(51) Int. Cl.: A47J 31/44

(54) **Sicherheitsvorrichtung eines Dampfschäumgeräts zur Herstellung eines geschäumten Getränks**
Security device of a steam apparatus for making a foamed drink
Dispositif de sécurité d'un appareil à vapeur pour préparation d'une boisson mousseuse

(30) Priorität: 06.02.2001 DE 20102048 U
(43) Veröffentlichungstag der Anmeldung: 07.08.2002
(73) Patentinhaber: Eugster/Frismag AG, 8590 Romanshorn (CH)
(72) Erfinder: Eugster, Arthur, 8590 Romanshorn (CH)
(74) Vertreter: Schubert, Siegmar, Dipl.-Ing.

(56) Entgegenhaltungen:
- EP-A- 1 086 642
- DE-C- 710 891
- US-A- 6 158 328

## Beschreibung

Die Erfindung betrifft eine Sicherheitsvorrichtung eines Dampfschäumgeräts zur Herstellung eines geschäumten Getränks nach dem Oberbegriff des Anspruchs 1, wie aus dem US - Patent 6158328 bekannt.

Die Zubereitung von Cappuccino erfolgt üblicherweise mit einer Espressomaschine, wobei mittels einer zur Espressomaschine gehörenden und mit deren Dampfgenerator in Verbindung stehenden Dampfdüse Milchschaum in einem separaten Milchgefäß erzeugt wird. Um Cappuccino oder geschäumten Milchkakao auch ohne aufwendige Espressomaschine zu erzeugen, kann auch ein relativ einfaches Dampf-Schäumgerät vorgesehen werden, welches im wesentlichen einen Dampfgenerator und eine automatisch arbeitende Schaumdüse umfaßt.

Im einzelnen weist ein solches Dampfschäumgerät analog zu einer Espressomaschine einen Dampfgenerator, der als Durchlauferhitzer ausgebildet sein kann, sowie eine Pumpe auf, die mit einem Wasservorratsbehälter in Verbindung steht, um zur Dampfabgabe gesteuert Wasser durch den Durchlauferhitzer zu pumpen. Beim Einschalten des Dampfschäumgeräts wird eine Heizung des Durchlauferhitzers aktiviert und im Stand-by-Betrieb mittels eines Thermostaten auf einer vorgegebenen Temperatur gehalten. Zur Erzeugung des Dampfes wird eine Dampf-Starttaste betätigt, welche die Pumpe in Gang setzt. Dadurch wird aus dem Vorratsbehälter Wasser in den Durchlauferhitzer gepumpt, welches verdampft und als leicht überspannter Dampf den an das Dampfrohr angesetzten Schäumkopf durchströmt. Der Schäumkopf ist so ausgebildet, daß in ihm bei dem Durchströmen des Dampfes Unterdruck erzeugt wird, um in ihn Milch aus einem separaten Milchgefäß und gleichzeitig Luft anzusaugen, wobei in dem Schäumkopf die angesaugte Milch zusammen mit der Luft aufgeschäumt wird. Aus dem Schäumkopf austretender Milchschaum kann direkt in ein unter dem Schäumkopf aufgestelltes Gefäß fließen.

Es besteht der Wunsch, den Schäumkopf von der Dampfleitung zu entfernen, insbesondere, weil sich nach Beendigung der Schaumzubereitung angetrocknete Milchreste im Schäumkopf befinden und der Schäumkopf deswegen ausgewaschen werden muß. Zu diesem Zweck ist er so ausgeführt, daß er leicht von dem Dampfrohr abgenommen werden kann. Wenn versehentlich bei abgenommenem Schäumkopf die Dampf-Starttaste betätigt wird, tritt überspannter Dampf mit hoher Geschwindigkeit aus der Dampfauslaßöffnung des Dampfrohres , das auch als Dampfauslaßrohr bezeichnet werden kann, üblicherweise nach unten gerichtet aus, so daß für die Bedienungsperson eine Verbrühungsgefahr besteht.

Da mit dem Schäumgerät außer Cappuccino, also einem Kaffee-Milchschaumgetränk, auch aufgeschäumten Milchkakao, ein von Kindern bevorzugtes Getränk, hergestellt werden kann und, da nicht ausgeschlossen werden kann, daß die Kinder den aufgeschäumten Milchkakao selbst zubereiten, ist es Ziel der vorliegenden Erfindung, die Handhabung des Dampfschäumgeräts besonders sicher zu gestalten.

Demgemäß ist es Aufgabe der vorliegenden Erfindung, eine Sicherheitsvorrichtung eines Dampfschäumgeräts der eingangs genannten Gattung so auszubilden, daß eine Bedienungsperson bei Fehlbedienung - Aktivieren der Dampfabgabe bei entferntem Brühkopf - gegen aus dem Dampfrohr austretenden Dampf zwangsläufig zuverlässig geschützt ist, ohne die Bedienung im übrigen zu komplizieren.

Diese Aufgabe wird gemäß dem kennzeichnenden Teil des Anspruchs 1 dadurch gelöst, daß auf dem Dampfrohr ein Hohlkörper schiebbar ist, der in einer Freigabestellung einen Dampfauslaß im wesentlichen nach unten freigibt, wogegen in anderer Stellung als der Freigabestellung des Hohlkörpers ein Dampfauslaß im wesentlichen nach unten unterbunden ist. Der auf dem Dampfrohr schiebbare Hohlkörper ist entweder eine Schubhülse gemäß den Ansprüchen 2 bis 8, die bei dem Ansetzen des Schäumkopfes an dem Dampfrohr zwangsläufig mit diesem nach oben verschoben wird, oder - bei geeigneter Ausbildung des Dampfrohres - der Schäumkopf selbst gemäß den Ansprüchen 9 und 10. In beiden Fällen wird ein die Bedienungsperson gefährdender Dampfauslaß im wesentlichen nach unten verhindert, wenn der Schäumkopf nicht an das Dampfrohr angesetzt ist. Zur Verhinderung des unerwünschten Dampfaustritts ist also ein gesonderter Bedienungsvorgang nicht erforderlich.

In der Sicherheitsvorrichtung ist im einzelnen nach Anspruch 2 der Hohlkörper eine Schubhülse, die bei von dem Dampfrohr entfernten Schäumkopf durch Vorspannung selbsttätig in eine Sperrstellung geschoben ist, in der sie einen Dampfauslaß aus der Dampfauslaßöffnung unterbindet, und die durch den auf das Dampfrohr aufgeschobenen Schäumkopf in eine Freigabestellung schiebbar ist, in der sie einen Dampfauslaß aus der Dampfauslaßöffnung freigibt. Außer der normalen Handhabung des Schäumkopfes ist also keine weitere Bedienungsmaßnahme durch die Bedienungsperson erforderlich, um die Sicherheitsvorrichtung zu aktivieren und. einen Dampfauslaß in gefährlicher Richtung zu unterbinden.

Die Schubhülse gehört nach Anspruch 3 zu einem Dampfschäumgerät mit einem Stromkreis, der eine Dampferzeugung und -abgabe aktiviert, in der Tegel einer Pumpe und eines Dampf-Startkontakts, der durch eine Dampf-Starttaste betätigt werden kann. In der Sicherheitsvorrichtung ist ein bewegliches Sperrelement durch die Schubhülse betätigbar und dergestalt ausgebildet, daß es in der Sperrstellung die Dampf-Starttaste und/oder diesen Stromkreis sperrt. Die Sicherheitsvorrichtung besteht also aus wenigen zusätzlichen Teilen, insbesondere der Schubhülse und dem Sperrelement.

In einer Version der Sicherheitsvorrichtung ist in dem Stromkreis, der die Dampfabgabe aktiviert, ein Doppelkontakt angeordnet, wobei der Startkontakt insbesondere mit einem zweiten Kontakt in Reihe geschaltet ist. Der Doppelkontakt kann einerseits durch das Sperrelement und andererseits durch die Dampf-Starttaste betätigt werden. Die Pumpe wird nur dann aktiviert, wenn sowohl die Dampf-Starttaste gedrückt ist, die den Dampf-Startkontakt des Doppelkontakts schließt, als auch das Sperrelement im entsperrten Zustand bzw. Freigabestellung den zweiten Kontakt des Doppelkontakts geschlossen hält.

Das Sperrelement ist nach Anspruch 5 zweckmäßig ein horizontal schwenkbarer Schwenk-Doppelarm, der mit einem ersten Arm in Sperrstellung unter die Dampf-Starttaste geschwenkt ist und diese gegen Niederdrücken sperrt und der mit einem zweiten Arm an einem mit der Schubhülse verbundenen Hubarm dergestalt angreift, daß der erste Arm des Schwenk-Doppelarms unter der DampfStarttaste weggeschwenkt ist, wenn die Schubhülse durch den an das Dampfrohr angesetzten Brühkopf nach oben gedrückt ist. In dieser Weise kann eine Dampf-Starttaste verriegelt und entriegelt werden, deren Betätigungsrichtung aus Bedienungsgründen parallel zu der Achse des Dampfrohres verläuft, in der auch die Schubhülse verschiebbar ist.

Hierzu wird die vertikale Schubbewegung der Schubhülse in eine horizontale Sperrbewegung des Doppel-Schwenkarms umgesetzt, wozu in unkomplizierter Weise gem. Anspruch 6 der Hubarm eine Hubarmschräge aufweist, die an einer Schräge des zweiten Arms des Schwenk-Doppelarms angreift, wobei der Schwenk-Doppelarm durch eine Rückstellfeder in Richtung der Sperrstellung belastet ist. Bei Anheben der Schubhülse mit dem Hubarm drückt dessen Hubarmschräge die Schräge des zweiten Arms des Schwenk-Doppelarms zur Seite, so daß der Schwenk-Doppelarm entgegen der Kraft der Rückstellfeder aus der Sperrstellung in eine Freigabestellung bewegt wird. - Die Schubhülse kann durch eine Feder so belastet sein, daß sie durch diese nach unten gedrückt wird. Die Verschiebbarkeit der Schubhülse nach unten wird dabei gem. Anspruch 8 durch Anschlagnasen an der Schubhülse begrenzt, die in Sperrstellung an einer Gehäusebuchse anschlägt. Dadurch ist die Sperrstellung exakt definiert.

Besonders zweckmäßig sind gem. Anspruch 8 aus der Schubhülse mindestens zwei vertikale, oben offene Schlitze in gegenseitigem Umfangsabstand ausgeformt, zwischen denen jeweils eine Zunge gebildet ist. Die Zungen können zur Montage der Schubhülse federnd zusammengedrückt werden, so daß diese leicht durch die Gehäusebuchse gesteckt werden kann, wonach sich die zusammengedrückten Zungen wieder ausdehnen können und die Anschlagnasen über einen oberen Rand der Gehäusebuchse nach außen gleiten.

In einer zweiten Variante der Sicherheitsvorrichtung ist gem. Anspruch 9 die Dampfauslaßöffnung des Dampfrohres im wesentlichen radial nach hinten in Richtung auf eine Gehäusevorderwand gerichtet. Als auf das Dampfrohr schiebbarer Hohlkörper dient hier der Brühkopf selbst, der innen in besonderer Weise ausgebildet ist: Aus dessen oberen Bereich ist innen eine vertikale, nach unten offene Nut dergestalt ausgeformt, daß sie einen Dampfkanal bildet, in den die Dampfauslaßöffnung des Dampfrohres mündet, wenn der Brühkopf auf das Dampfrohr aufgeschoben ist und somit betriebsbereit ist. Wenn der Brühkopf dagegen von dem Dampfrohr entfernt ist und die Dampf-Starttaste versehentlich betätigt wird, trifft der aus dem der Dampfauslaßöffnung des Dampfrohrs austretende Dampf nicht die Bedienungsperson, sondern von dieser weg gerichtet die Gehäusevorderwand, an der der Dampf abkühlt, teilweise kondensiert und teilweise nach den Seiten verteilt jedenfalls unschädlich abströmt. Das Kondensat kann von einer Auffangschale gesammelt werden. Gem. Anspruch 10 ist der in der angegebenen Weise innen gestaltete Brühkopf fertigungsgünstig und zur besseren Reinigung zweiteilig ausgeführt.

Drei beispielhafte Versionen der erfindungsgemäßen Sicherheitsvorrichtung werden im nachfolgenden anhand einer Zeichnung mit fünf Figuren beschrieben, aus denen weitere Merkmale der Erfindung hervorgehen können. Es zeigt:
- Fig. 1: Eine Frontansicht auf ein Schäumgerät in schematischer Darstellung, in das die Sicherheitsvorrichtung eingesetzt ist,
- Fig. 2: einen Längsschnitt durch eine erste Version der Sicherheitsvorrichtung,
- Fig. 3: eine schaubildliche Darstellung der ersten Version der Sicherheitsvorrichtung,
- Fig. 3a: einen Schnitt in der Schnittebene, die in der Linie AB der Figur 3 liegt,
- Fig. 4: einen Längsschnitt durch eine zweite Version der Sicherheitsvorrichtung und
- Fig. 5: eine dritte Version der Sicherheitsvorrichtung als Bestandteil eines Dampfschäumgeräts in einer Seitenansicht, teilweise geschnitten.

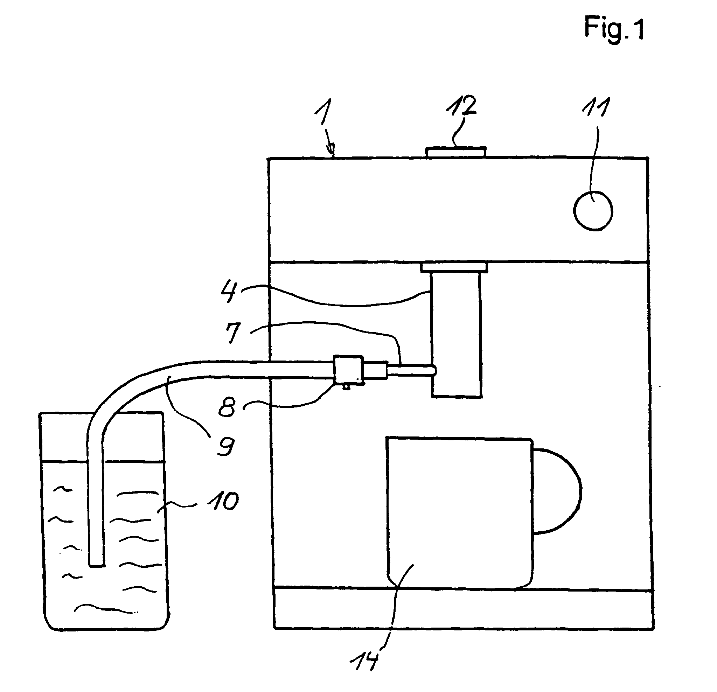

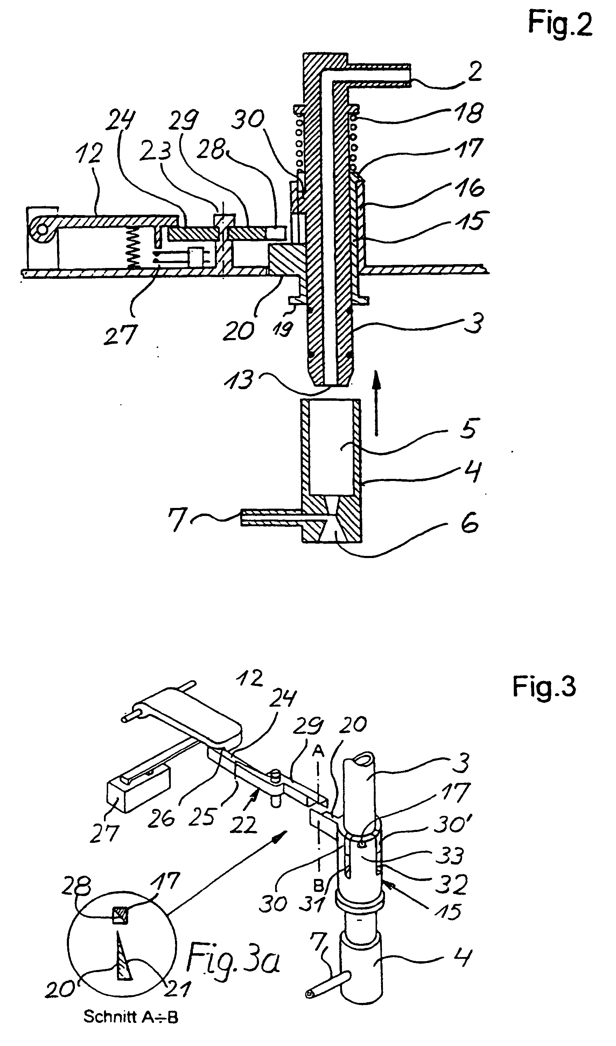

In Fig. 1 ist mit 1 ein Gehäuse eines Dampfschäumgeräts bezeichnet, in dem ein Dampferzeuger mit einem Durchlauferhitzer, einem Wasservorratsbehälter und einer den Durchlauferhitzer mit dem Wasservorratsbehälter verbindenden Pumpe untergebracht sind. Gemäß Figur 2 steht ein Ausgang des Durchlauferhitzers über einem Dampfeinleitstutzen 2 mit einem Dampfrohr 3 in Verbindung, an welches von unten ein Schäumkopf 4 angesetzt werden kann.

Der Schäumkopf 4 weist eine obere, im wesentlichen zylindrische Ausnehmung 5 auf, die in ein unteres Ende des Dampfrohres 3 dampfdicht eingeschoben werden kann sowie nach unten anschließend eine Venturirohr-ähnliche Ausnehmung 6, in die ein Milchansaugstutzen 7 mündet. Der Milchansaugstutzen geht über eine Luftansaugeinheit 8, durch die Luft in den Milchansaugstutzen einströmen kann, in einen Milchansaugstutzen 9 über, der in einen Milchbehälter 10 taucht.

In Figur 1 ist ein auf einer nach vorne vorstehenden Seite des Gehäuses eingelassener Netzschalter 11 erkennbar sowie auf einer Oberseite des Gehäuses eine Dampf-Starttaste 12.

Das Dampfschäumgerät wird mit dem Netzschalter 11 eingeschaltet, wonach der Durchlauferhitzer auf eine vorgegebene, mit einem Thermostaten geregelte Temperatur erwärmt wird, die zum Verdampfen von Wasser, welches in den Durchlauferhitzer befördert wird, ausreicht, um leicht vorgespannten Wasserdampf zu erzeugen. Mit der Dampf-Starttaste 12 wird die Pumpe in Gang gesetzt, die eine dosierte Wassermenge in den Durchlauferhitzer zur Verdampfung pumpt. Der demgemäß aus einer Dampfauslaßöffnung 13 des Dampfrohres in den Schäumkopf 4 strömende Dampf saugt über den Milchansaugstutzen ein Luft-Milch-Gemisch an, welches in dem Schäumkopf 4 mit dem Dampf zu einem Milch-Luft-Wasserdampfgemisch aufgeschäumt wird. Der Schaum strömt direkt in ein unter dem Schäumkopf 4 aufgestelltes Gefäß 14.

Mit der ersten Version der Sicherheitsvorrichtung gem. den Figuren 2 und 3 wird verhindert, daß die Dampf-Starttaste 12 zur Dampferzeugung niedergedrückt werden kann, wenn der Schäumkopf 4 von dem unteren Ende des Dampfrohres 3 entfernt ist und so der Dampf aus der Dampfauslaßöffnung 13 nach unten und zum Teil seitlich zu der Bedienungsperson abströmen könnte.

Hierzu weist die erste Version der Sicherheitsvorrichtung eine Schubhülse 15 auf, die bei der Montage in eine Gehäusebüchse 16 eingesteckt wird und in dieser unter Belastung durch eine Feder 18 einrastet. Dabei gleiten oben seitlich aus der Schubhülse herausragende Anschlagnasen, z.B. 17, über den bezeichneten oberen Rand der Gehäusebuchse und liegen auf diesem in einer Sperrstellung auf, in welche die Schubhülse 3 durch die Feder 18 gedrückt wird, solange sie nicht durch den unten an das Dampfrohr 3 angesetzten Schäumkopf 4, der an einem unteren Flansch 19 der Schubhülse 15 zur Anlage gelangt, hochgedrückt wird.

Von der Schubhülse 15 steht seitlich ein Hubarm 20 ab, der an seiner Stirnseite eine Hubarmschräge 21 aufweist. Diese befindet sich in der Sperrstellung der Schubhülse 15 unterhalb eines Schwenk-Doppelarms 22, der an einem Drehbolzen 23 in einer horizontalen Ebene drehbar gelagert ist und durch eine Rückstellfeder 25, siehe Fig. 3, mit einem ersten Arm 24 unter die Dampf-Starttaste 12 gedreht ist und an einer Ausnehmung 26 der Dampf-Starttaste 12 anliegt. Deswegen kann die Dampf-Starttaste 12 nicht nach unten gedrückt werden und an einen Dampf-Startkontakt 27 betätigen.

Beim Aufschieben des Schäumkopfes 4 auf das untere Ende des Dampfrohres 3 wird hingegen die Schubhülse 15 nach oben gedrückt und die Hubarmschräge 21 fährt unter eine Schräge 28 eines zweiten Arms 29 des Schwenk-Doppelarms 22 und dreht dadurch den Schwenk-Doppelarm 22 um den Drehbolzen 23 als Drehachse so weit aus seiner Ruhelage, daß die Starttaste 12 gedrückt werden kann und der Dampf-Startkontakt 27 betätigt wird.

Bei Abnahme des Schäumkopfes 4 wird die Schubhülse 15 durch die Feder 18 wieder nach unten in die Sperrstellung gedrückt und die Rückstellfeder 25 dreht den Schwenk-Doppelarm 22 in seine Sperrstellung unter die Dampf-Starttaste 12 zurück und arretiert diese.

Drei sternförmig um den Umfang des Dampfrohres 3 angeordnete Gleitnasen 30, dienen u.a. als Verbindungsteile zur ortsfesten Verbindung des Dampfrohres 13 mit der Gehäusebuchse 16 des Gehäuses 1.

Entsprechend den Gleitnasen 30 sind aus der Schubhülse 15 oben drei Schlitze um deren Umfang ebenfalls sternförmig ausgeformt, von denen zwei Schlitze 31, 32 in Fig. 3 erkennbar sind. Mittels der Schlitze ist die Schubhülse 15 durch die Gleitnasen 30, 30' in Längsrichtung des Dampfrohres verschiebbar geführt. Außerdem entstehen durch die drei Schlitze in dem oberen Abschnitt der Schubhülse 15 drei Zungen, und zwar jeweils eine Zunge, z.B. 33, zwischen zwei Schlitzen, z.B. 31 und 32. Die Zungen, z.B. 33, sind elastisch, so daß die Schubhülse 15 bei der Montage, bei der sie von unten durch die Gehäusebuchse 16 geschoben wird, zusammengedrückt wird, bis die Anschlagnase 17 an jedem oberen Ende der Zunge über den oberen Rand der Gehäusebuchse 16 schnappt und die Schubhülse 15 wieder ihre ursprüngliche Form annimmt.

In der schaubildlichen Darstellung der ersten Version der Sicherheitsvorrichtung gem. Fig. 3 ist zur besseren Veranschaulichung der Schubhülse 15 die Gehäusebuchse 16 weggelassen.

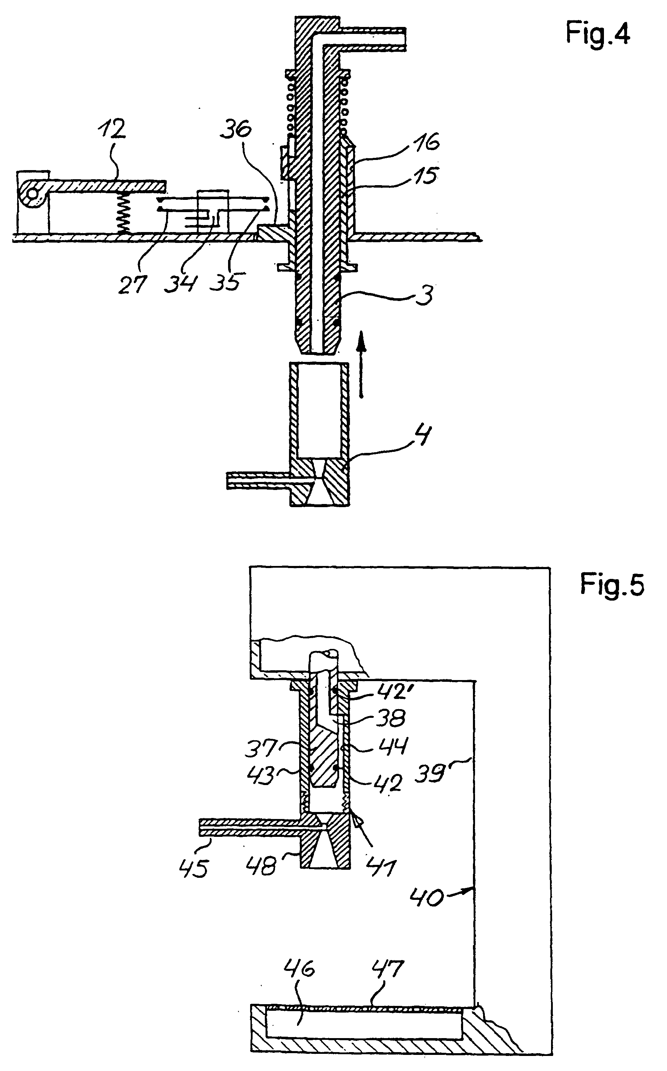

Die zweite Version der Sicherheitsvorrichtung, die in Figur 4 dargestellt ist, unterscheidet sich von der ersten Version gem. den Fig. 2 und 3 im wesentlichen dadurch, daß der Schwenk-Doppelarm 22, der Drehbolzen 23 und die Rückstellfeder 24 zur mechanischen Arretierung der Dampf-Starttaste 12 entfallen und daß statt dessen ein Doppelkontakt 34 vorgesehen ist, der außer dem Dampf-Startkontakt 27 einen zweiten Kontakt 35 in Reihe zu dem Dampf-Startkontakt umfaßt. Der zweite Kontakt 35 ist durch den Hubarm 36 betätigbar, der wie der Hubarm 20 in der ersten Version von der Schubhülse seitlich vorsteht, jedoch keine Hubarmschräge aufzuweisen braucht. Der Hubarm 36 ist so bezüglich des Doppelkontakts 34 angeordnet, daß in der gezeichneten Sperrstellung der Schubhülse 15 der Hubarm 36 von dem zweiten Kontakt 35, der ein Schließkontakt ist, entfernt ist. In dieser Sperrstellung der Schubhülse 15 kann somit die Dampferzeugung nicht aktiviert werden, auch wenn der Dampf-Startkontakt 27 des Doppelkontakts 34 versehentlich durch Drücken der Dampf-Starttaste 12 geschlossen ist. Wenn hingegen der Schäumkopf 15 an das untere Ende des Dampfrohres 3 angesetzt wird, so daß die Schubhülse 15 hochgedrückt wird, betätigt der Hubarm 36 den zweiten Kontakt 35 des Doppelkontakts 34, der somit in dieser Freigabestellung bei Betätigung der Dampf-Starttaste 12 die Dampferzeugung aktivieren kann.

In Figur 5 ist die dritte Version der Sicherheitsvorrichtung eines Dampfschäumgeräts dargestellt, die den Vorteil hat, daß außer dem üblicherweise lösbaren Schäumkopf, der hier in besonderer Weise ausgebildet ist, keine beweglichen Teile erforderlich sind.

Das Dampfschäumgerät weist ein abgewandeltes Dampfrohr 37 auf, dessen Auslaßöffnung 38 nicht wie sonst nach unten, sondern nach hinten gerichtet ist und einer Gehäusevorderwand 39 eines Gehäuses 40 zugewandt ist. Zur Abdichtung eines angesetzten Schäumkopfes 41 sind in das untere Ende des Dampfrohres 37 O-Ringe 42, 43 eingelassen, ähnlich wie in dem Dampfrohr 3 zu den voranstehend erörterten Versionen, in denen die O-Ringe nicht bezeichnet sind.

Aus einem oberen Bereich 43 des Schäumkopfes 41 ist eine vertikale, unten offene Nut 44 ausgeformt, die zusammen mit dem Dampfrohr 37 einen Dampfkanal zwischen der Auslaßöffnung 38 und einem verbleibenden zylindrischen Hohlraum über dem unteren Bereich des Schäumkopfes 41 herstellt, in den ein Milchansaugstutzen 45 mündet. Der Schäumkopf 41 ist in diesem Bereich innen wie der Schäumkopf 4 ausgebildet. Im Unterschied zu letzterem kann ein unterer Teil 48 des Schäumkopfes 41, der den Milchansaugstutzen 45 trägt, von einem darüberliegenden Teil 43 des Schäumkopfes getrennt werden, weil beide Teile 43, 48 mit einem in der Zeichnung angedeuteten, nicht bezeichneten Gewinde lösbar verbunden sind.

Im Bodenbereich des Dampfschäumgeräts ist eine Auffangschale 46 angeordnet, die durch ein Lochblech 47 abgedeckt ist.

Wenn der Schäumkopf 41 von dem Dampfrohr 37 entfernt ist und versehentlich eine in Figur 5 nicht dargestellte Dampf-Starttaste betätigt wird und demgemäß der Dampfgenerator aktiviert wird, strömt Dampf aus der Auslaßöffnung 38 des Dampfrohres 37 nach hinten, wo er auf die Gehäusevorderwand 39 trifft, an dieser abkühlt, sich nach allen Seiten verteilt oder kondensiert, wonach das abfließende Kondensat von der Auffangschale 46 aufgenommen wird. Hingegen wird praktisch kein Dampf nach unten und vorne unten auf die Bedienungsperson geleitet.

Wenn hingegen der Schäumkopf 41 auf das untere Ende des Dampfrohres 37 geschoben ist und dessen Auslaßöffnung 38 umschließt, so daß die Nut 44 die in Figur 5 dargestellte Position einnimmt, so strömt der Dampf nach Betätigung der Dampf-Starttaste durch den mit der Nut 44 gebildeten Dampfkanal nach unten, wo er auf den unteren inneren Bereich des Schäumkopfes 41 trifft, der somit in der oben beschriebenen Weise Milchschaum erzeugt.

Wenn der Schäumkopf 41 anschließend von dem Dampfschäumgerät abgenommen wird, um gereinigt zu werden, wird er leicht durch Auseinanderschrauben seiner beiden Teile (43, 48) innen gut zugänglich.

Die Zeichnung stellt keine Merkmale zur lösbaren Befestigung des Schäumkopfes an dem unteren Ende des Dampfrohres dar, die in üblicher Weise ausgeführt sein können und in der dritten Version gem. Fig. 5 nicht nur zu einer Höhenbegrenzung des befestigten Schäumkopfes 41, sondern auch zu einer Ausrichtung in Umfangsrichtung ausgebildet sind, damit die Nut 44 ihre Sollposition zu der Auslaßöffnung 38 einnimmt.

Wenngleich die Erfindung voranstehend in Zusammenhang mit einem Dampfschäumgerät beschrieben wurde kann sie auch bei einer entsprechenden Espressomaschine Anwendung finden, die in den Ansprüchen unter dem Begriff Dampfschäumgerät zu subsumieren ist.

### Bezugszeichenliste:

- 1: Gehäuse
- 2: Dampfeinleitstutzen
- 3: Dampfrohr
- 4: Schäumkopf
- 5: oberer zylindr. Ausnehmung
- 6: untere, ventilrohrähnliche Ausnehmung
- 7: Milchansaugstutzen
- 8: Luftansaugeinheit
- 9: Milchansaugschlauch
- 10: Milchbehälter
- 11: Netzschalter
- 12: Dampf-Starttaste
- 13: Dampfauslaßöffnung
- 14: Gefäß
- 15: Schubhülse
- 16: Gehäusebuchse
- 17: Anschlagnase
- 18: Feder
- 19: Flansch
- 20: Hubarm
- 21: Hubarm-Schräge
- 22: Schwenk-Doppelarm
- 23: Drehbolzen
- 24: Rückstellfeder
- 25: 1. Arm
- 26: Ausnehmung
- 27: Dampf-Startkontakt
- 28: Schräge
- 29: 2. Arm
- 30. 30': Gleitnase
- 31: Schlitze
- 32: Schlitze
- 33: Zunge
- 34: Doppelkontakt
- 35: 2. Kontakt
- 36: Hubarm
- 37: Dampfrohr
- 38: Dampf-Auslaßöffnung
- 39: Gehäusevorderwand
- 40: Gehäuse
- 41: Schäumkopf
- 42, 42': O-Ringe
- 43: oberer Teil
- 44: Dampfkanal
- 45: Milchansaugstutzen
- 46: Auffangschale
- 47: Lochblech
- 48: unterer Teil

## Patentansprüche

1. Sicherheitsvorrichtung eines Dampfschäumgeräts zur Herstellung eines geschäumten Getränks, insbesondere geschäumten Milchkakao oder Cappuccino, mit einem mit einem Dampfgenerator verbundenen Dampfrohr (3, 37), welches eine Dampfauslaßöffnung (13, 38) aufweist, mit einem auf das Dampfrohr aufschiebbaren Schäumkopf (4, 41), der im aufgeschobenen Zustand die Dampfauslaßöffnung (13, 38) einschließt, **dadurch gekennzeichnet, daß** auf dem Dampfrohr (3, 37) ein Hohlkörper schiebbar ist, der in einer Freigabestellung einen Dampfauslaß im wesentlichen nach unten freigibt, wogegen in anderer Stellung als der Freigabestellung des Hohlkörpers ein Dampfauslaß im wesentlichen nach unten unterbunden ist.

2. Sicherheitsvorrichtung nach Anspruch 1, **dadurch gekennzeichnet, daß** der Hohlkörper eine Schubhülse (15) ist, die bei von dem Dampfrohr (3) entfernten Schäumkopf (4) durch Vorspannung selbsttätig in eine Sperrstellung geschoben ist, in der sie einen Dampfauslaß aus der Dampfauslaßöffnung (13) unterbindet, und die durch den auf das Dampfrohr (3) aufgeschobenen Schäumkopf (4) in eine Freigabestellung schiebbar ist, in der sie einen Dampfauslaß aus der Dampfauslaßöffnung (13) freigibt.

3. Sicherheitsvorrichtung nach den Ansprüchen 1 und 2, **dadurch gekennzeichnet, daß** ein Dampf-Startkontakt (27) in einem Stromkreis angeordnet ist, der eine Dampferzeugung aktiviert , daß der Dampf-Startkontakt durch eine Dampf-Starttaste (12) betätigbar ist, u. daß ein Sperrelement durch die Schubhülse (15) verstellbar ist und dergestalt ausgebildet ist, daß es in der Sperrstellung die Dampf-Starttaste (12) und/oder den Stromkreis sperrt, in dem der Dampf-Startkontakt (27) angeordnet ist.

4. Sicherheitsvorrichtung nach den Ansprüchen 1 bis 3, **gekennzeichnet durch** einen in dem Stromkreis angeordneten Doppelkontakt (34), der einerseits **durch** das Sperrelement und andererseits **durch** die Dampf-Starttaste (12) betätigbar ist.

5. Sicherheitsvorrichtung nach den Ansprüchen 1 bis 3, **dadurch gekennzeichnet, daß** das Sperrelement ein horizontal schwenkbarer Schwenk-Doppelarm (22) ist, der mit einem ersten Arm (25) in Sperrstellung unter die Dampf-Starttaste (12) geschwenkt ist und diese gegen Niederdrücken sperrt und der mit einem zweiten Arm (29) an einem mit der Schubhülse (15) verbundenen Hubarm dergestalt angreift, daß der erste Arm (25) des Schwenk-Doppelarms (22) unter der Dampf-Starttaste (12) weggeschwenkt ist, wenn die Schubhülse (15) durch den an das Dampfrohr (3) angesetzten Brühkopf (4) nach oben gedrückt ist.

6. Sicherheitsvorrichtung nach den Ansprüchen 1 bis 3 und 5, **dadurch gekennzeichnet, daß** der Hubarm (20) eine Hubarmschräge (21) aufweist, die an einer Schräge (28) des zweiten Arms (29) des Schwenk-Doppelarms (22) angreift und daß der Schwenk-Doppelarm (22) durch eine Rückstellfeder (24) in Richtung der Sperrstellung belastet ist.

7. Sicherheitsvorrichtung nach den Ansprüchen 1 bis 3, 5 und 6, **dadurch gekennzeichnet, daß** aus einem oberen Bereich der Schubhülse (15) mindestens ein oben offener Schlitz parallel zu der Längsachse der Schubhülse ausgeformt ist, in den eine von dem Dampfrohr außen abstehende Gleitnase (30) ragt.

8. Sicherheitsvorrichtung nach den Ansprüchen 1 bis 3, 5 bis 7, **dadurch gekennzeichnet, daß** aus der Schubhülse (15) mindestens zwei vertikale, oben offene Schlitze (31, 32) in Umfangsabstand zueinander ausgeformt sind, zwischen denen jeweils eine Zunge 33 gebildet ist, daß von einem oberen Rand der Zunge (33) eine Anschlagnase (17) nach außen absteht und daß die Schubhülse (15) gleitbeweglich von einer Gehäusebuchse (16) aufgenommen ist, an der die Anschlagnase (17) der Zunge (33) in Sperrstellung oben anschlägt.

9. Sicherheitsvorrichtung nach Anspruch 1, **dadurch gekennzeichnet, daß** die Dampfauslaßöffnung (38) des Dampfrohres (37) im wesentlichen nach hinten in Richtung auf eine Gehäusevorderwand gerichtet ist und daß als auf dem Dampfrohr (37) schiebbarer Hohlkörper der Brühkopf (41) dient, aus dessen oberen Teil (43) innen eine vertikale, unten offene Nut dergestalt ausgeformt ist, daß sie einen Dampfkanal (44) bildet, in den in aufgeschobener Stellung des Brühkopfes (41) die Dampfauslaßöffnung (38) mündet.

10. Sicherheitsvorrichtung nach den Ansprüchen 1 und 9, **dadurch gekennzeichnet, daß** der Brühkopf (41) zweiteilig mit einem oberen Teil (43), aus dem die Nut des Dampfkanals (44) ausgeformt ist, und einem mit diesem verschraubbaren unteren Teil (48) ausgebildet ist, in welches ein Milchansaugstutzen (45) mündet und welches innen eine Formgebung aufweist, die geeignet ist, Unterdruck bei einströmendem Dampf zu erzeugen.

## Claims

1. Security device of a steam apparatus for making a foamed drink, particularly foamed milk cocoa or cappuccino, comprising a steam pipe (3, 37) connected with a steam generator, said steam pipe including a steam outlet opening (13, 38), comprising furtheron a foaming head (4, 41) which can be slipped onto said steam pipe, said foaming head including in its slipped-on state said steam outlet opening (13, 38), **characterized in that** onto said steam pipe (3, 37) a hollow body may be slipped which when in a release position releases a steam discharge substantially downwardly whereas in a position other than the release position of the hollow body steam discharge substantially downwardly is prevented.

2. Security device according to claim 1, **characterized in that** said hollow body is a slide jacket (15) which when said foaming head (4) is removed from said steam pipe (3) is automatically slipped by pre-tension into a locking position in which it prevents steam discharge from said steam outlet opening (13) and which by means of said foaming head (4) slipped onto said steam pipe (3) may be slipped into a release position in which it releases a steam discharge from said steam outlet pipe (13).

3. Security device according to one of claims 1 and 2, **characterized in that** a steam starter contact (27) is provided in an electric circuit which activates steam generation, that said steam starter contact may be actuated by a steam starter button (12) and that a lock element may be adjusted by said slide jacket (15) and is formed so that it locks, when in its locking position, said steam starter botton (12) and/or the electric circut in which said steam starter contact (27) is disposed.

4. Security device according to one of claims 1 to 3, **characterized by** a double contact (34) disposed in said current circuit which can be actuated by said lock element, on one side, and by said steam starter button (12), on the other.

5. Security device according to claims 1 to 3, **characterized in that** said lock element is a horizontally turnable swivelling double arm (22) which is turned with its first arm (25) in locking position under said steam starter button (12) locking it against pressing down and which engages with its second arm (29) at a lift arm connected with said slide jacket (15) in such a way that said first arm (25) of said swivelling double arm (22) is turned away from under said steam starter button (12) when said slide jacket (15) is pressed upwardly by boiler head (4) fastened to said steam pipe (3).

6. Security device according to claims 1 to 3 and 5, **characterized in that** said lift arm (20) has a lift arm inclination (21) engaging in an inclination (28) of said second arm (29) of said swivelling double arm (22) and that said swivelling double arm (22) is loaded by a return spring (24) in the direction of the locking position.

7. Security device according to claims 1 to 3, 5 and 6, **characterized in that** from an upper area of said slide jacket (15) at least one slot is formed open above in parallel to the longitudinal axis of said slide jacket, into which slot a slide nose (30) projects extending outside of said steam pipe.

8. Security device according to claims 1 to 3, 5 to 7, **characterized in that** from said slide jacket (15) at least two slots (31, 31), vertical and open above, are formed out in peripheral distance relative to each other between which a tongue (33) is formed, that from one upper edge of said tongue (33) a stop dog (17) extends outwardly, and that said slide jacket (15) is received, by glide motion, by a case cylinder (16) to which said stop dog (17) of said tongue (33) butts above in the locking position.

9. Security device according to claim 1, **characterized in that** said steam discharge opening (38) of said steam pipe (37) is essentially backwardly directed in the direction to a housing front wall, and that as the hollow body to be slipped on said steam pipe (37), said boiling head (41) is employed from the upper part (43) of which at the inside a vertical groove open on the bottom is formed out so that it forms a steam channel (44) into which opens, in the slipped-on position of said boiling head (41), said steam outlet opening (38).

10. Security device according to claims 1 and 9, **characterized in that** said boiling head (41) is formed of two pieces comprising one upper part (43) from which the groove of said steam channel (44) is shaped out and a lower part (48) screwable to it into which opens a milk suction fitting (45) and which is shaped inside in a way which is suited to generate an underpressure when steam is flowing in.

## Revendications

1. Dispositif de sécurité d'un appareil de moussage à vapeur pour la préparation d'une boisson moussante, en particulier de cacao au lait moussant ou de cappuccino, comprenant un tube vapeur (3, 37) qui est relié à un générateur de vapeur et qui présente une ouverture de sortie de vapeur (13, 38), une tête de moussage (4, 41) pouvant être insérée sur le tube vapeur, qui enferme l'ouverture de sortie de vapeur (13, 38) dans l'état inséré, **caractérisé en ce que** sur le tube vapeur (3, 37) peut être enfilé un corps creux, qui autorise une sortie de vapeur sensiblement vers le bas dans une position de libération, alors que, dans une autre position que la position de libération du corps creux, une sortie de vapeur sensiblement vers le bas est interdite.

2. Dispositif de sécurité selon la revendication 1, **caractérisé en ce que** le corps creux est une douille coulissante (15) qui, lorsque la tête de moussage (4) est poussée du tube vapeur (3), est poussée automatiquement par précontrainte dans une position de blocage, dans laquelle elle interdit une sortie de vapeur de l'ouverture de sortie de vapeur (13), et qui peut être poussée par la tête de moussage (4) insérée sur le tube vapeur (3), dans une position de libération, dans laquelle elle autorise une sortie de vapeur de l'ouverture de sortie de vapeur (13).

3. Dispositif de sécurité selon les revendications 1 et 2, **caractérisé en ce qu'**un contact de démarrage de vapeur (27) est disposé dans un circuit électrique, qui active une production de vapeur, **en ce que** le contact de démarrage de vapeur peut être actionné par une touche de démarrage de vapeur (12) et **en ce qu'**un élément de blocage peut être déplacé par la douille coulissante (15) et est conçu de telle sorte qu'il bloque, dans la position de blocage, la touche de démarrage de vapeur (12) et/ou le circuit électrique dans lequel est disposé le contact de démarrage de vapeur (27).

4. Dispositif de sécurité selon les revendications 1 à 3, **caractérisé par** un double contact (34) disposé dans le circuit électrique, qui peut être actionné d'une part par l'élément de blocage et d'autre part par la touche de démarrage de vapeur (12).

5. Dispositif de sécurité selon les revendications 1 à 3, **caractérisé en ce que** l'élément de blocage est un double bras pivotant (22) apte à pivoter horizontalement, qui est placé par pivotement, avec un premier bras (25), dans la position de blocage au-dessous de la touche de démarrage de vapeur (12) et bloque celle-ci contre un enfoncement et qui s'applique sur un second bras (29) sur un bras de levage relié à la douille coulissante (15), de telle sorte que le premier bras (25) du double bras pivotant (22) s'écarte en pivotant au-dessous de la touche de démarrage de vapeur (12) lorsque la douille coulissante (15) est repoussée vers le haut par la tête de percolation (4) placée sur le tube vapeur (3).

6. Dispositif de sécurité selon les revendications 1 à 3 et 5, **caractérisé en ce que** le bras de levage (20) présente un chanfrein de bras de levage (21) qui s'applique sur un chanfrein (28) du second bras (29) du double bras pivotant (22) et **en ce que** le double bras pivotant (22) est sollicité par un ressort de rappel (24) en direction de la position de blocage.

7. Dispositif de sécurité selon les revendications 1 à 3, 5 et 6, **caractérisé en ce que** dans une zone supérieure de la douille coulissante (15) est formée, parallèlement à l'axe longitudinal de la douille coulissante, au moins une fente ouverte en haut, dans laquelle pénètre un ergot de glissement (30) faisant saillie à l'extérieur du tube vapeur.

8. Dispositif de sécurité selon les revendications 1 à 3, 5 à 7, **caractérisé en ce que** dans la douille coulissante (15) sont formées au moins deux fentes (31, 32) verticales et ouvertes en haut, à distance l'une de l'autre dans le sens périphérique, entre lesquelles est formée respectivement une lame (33), **en ce qu'**un ergot de butée (17) fait saillie vers l'extérieur d'un bord supérieur de la lame (33) et **en ce que** la douille coulissante (15) est reçue, avec une liberté de glissement, par une douille de boîtier (16), sur laquelle l'ergot de butée (17) de la lame (33) bute en haut dans la position de blocage.

9. Dispositif de sécurité selon la revendication 1, **caractérisé en ce que** l'ouverture de sortie de vapeur (38) du tube vapeur (37) est orientée sensiblement vers l'arrière en direction d'une paroi avant de boîtier, et **en ce que** la tête de percolation (41) fait office de corps creux pouvant glisser sur le tube vapeur (37), tête dans la partie supérieure (43) de laquelle est formée, à l'intérieur, une rainure verticale ouverte en bas de telle sorte qu'elle forme un conduit de vapeur (44) dans lequel l'ouverture de sortie de vapeur (38) débouche dans la position insérée de la tête de percolation (41).

10. Dispositif de sécurité selon les revendications 1 et 9, **caractérisé en ce que** la tête de percolation (41) est conçue en deux parties avec une partie supérieure (43), dans laquelle est formée la rainure du conduit de vapeur (44), et une partie inférieure (48) pouvant être vissée sur la partie supérieure, partie inférieure dans laquelle débouche une tubulure d'aspiration de lait (45) et qui présente à l'intérieur une configuration appropriée pour générer une dépression en cas d'arrivée de vapeur.
